# EUROPEAN PATENT SPECIFICATION

(11) **EP 2 663 120 B1**
(45) Date of publication and mention of the grant of the patent: **06.05.2020**
(21) Application number: 13160862.2
(22) Date of filing: 25.03.2013
(51) Int. Cl.: H04W 16/18, H04W 16/30, H04W 24/02

(54) **METHOD AND APPARATUS FOR DETERMINING INCORRECT ANTENNA CONFIGURATION WITHIN A CELLULAR COMMUNICATION NETWORK**
VERFAHREN UND VORRICHTUNG ZUR BESTIMMUNG INKORREKTER ANTENNENKONFIGURATION INNERHALB EINES ZELLULÄREN FUNKKOMMUNIKATIONNETZWERKS
PROCÉDÉ ET APPAREIL PERMETTANT DE DÉTERMINER LA CONFIGURATION D'ANTENNE INCORRECTE DANS UN RÉSEAU DE COMMUNICATION CELLULAIRE

(30) Priority: 16.04.2012 US 201213447710
(43) Date of publication of application: 13.11.2013
(73) Proprietor: Viavi Solutions UK Limited, Newbury, Berkshire RG14 2PZ (GB)
(72) Inventor: Randell, Nicholas, Alton, Hampshire GU34 4PZ (GB); Kenington, Peter, Dr., Chepstow, Monmouthshire NP16 6PE (GB)
(74) Representative: Murgitroyd & Company

(56) References cited:
- EP-A1- 2 405 686
- WO-A1-2010/081659
- US-A1- 2010 120 415
- US-A1- 2011 131 317

## Description

### Field of the invention

The field of the invention relates to a method and apparatus for determining incorrect antenna configuration, and in particular to a method and apparatus for determining incorrect antenna configuration within a cellular communication network.

### Background of the Invention

Cellular communication systems, such as the 2^{nd} Generation (2G) (otherwise referred to as Global System for Mobile (GSM) communications) and the 3^{rd} Generation (3G) of mobile telephone standards and technology, are well known. An example of such 3G standards and technology is the Universal Mobile Telecommunications System (UMTS), developed by the 3^{rd} Generation Partnership Project (3GPP) (www.3gpp.org).

Typically, cellular communication units, or User Equipment (UE) as they are often referred to in 3G parlance, communicate with a Core Network (CN) of the 3G cellular communication system via a Radio Network Subsystem (RNS). A cellular communication system typically comprises a plurality of radio network subsystems, each radio network subsystem comprising one or more base stations, each base station supporting one or more communication cells to which UEs may attach, and thereby connect to the network.

Due to the size and complexity of typical cellular communication networks, significant time, effort and resources go into the planning and configuration of a cellular communication network in order to provide efficient and effective network coverage. Furthermore, cellular communication networks are continuously being developed and evolved, for example to improve network coverage and/or to be updated to new technologies etc. As such, the positioning and configuration of cells and/or cell sectors is often changed in order to reflect desired changes to the network configuration. However, such continuous development and changing of a cellular communication network means that it is almost impossible to accurately keep track of the actual layout and configuration of all cells and their respective sectors within the entire network. This is especially true since mistakes are inevitably going to occur when changes are physically implemented within the network.

Items of user equipment are designed to be resilient to poor network coverage, and as such are reasonably resilient to some errors in network layout and configuration. Accordingly, detecting errors in the layout and configuration of a cellular communication network can be difficult. Despite such resilience of the user equipment, correct antenna configuration is important for efficient use of network resources, and also for reducing the power consumption of the user equipment and minimising interference.

In order to detect errors within the layout and configuration of a cellular communication network, it is known to perform drive tests in which network data and geographical data are collected using test equipment to identify any errors within the network layout and configuration. However, such drive tests are expensive and time consuming, and in order to be effective are required to be continuously performed across the network.

Thus, there is a need for an improved method and apparatus for determining incorrect antenna configurations within a cellular communication network, whereby at least some of the above mentioned problems with known techniques are substantially alleviated.

WO-A-2010/081659 discloses a wireless communication network. US-A-2010/120415 discloses antenna auto-configuration.

### Summary of the Invention

Accordingly, the invention seeks to mitigate, alleviate or eliminate one or more of the abovementioned disadvantages singly or in any combination.

According to a first aspect of the invention, there is provided a method of determining incorrect antenna configuration within a cellular communication network, as set out in claim 1.

In this manner, there is provided a method that enables errors within the layout and configuration of a cellular communication network to be detected using crowd-sourced data. Advantageously, such crowd-sourced data comprises data indicative of actual cell coverage, as experienced by wireless communications units within the cellular communication system, and which typically may be continuously updated without the need for expensive and time consuming drive tests to be performed using specialised test equipment. Accordingly, such crowd-sourced data may be used to provide an up-to-date indication of actual cell coverage with which network configuration data that defines the intended network configuration may be compared, to detect errors within the layout and configuration of the actual cellular communication network.

In one optional embodiment of the invention, the crowd-sourced data may comprise at least one indication of a geographical location of the coverage area for at least one cell sector. For example, the crowd-sourced data may comprise at least one indication of at least one from a group comprising:
- an indication of a geographical location representative of a central point within the coverage area of the at least one cell sector; and
- an indication of a radius of the coverage area of the at least one cell sector.

In one optional embodiment of the invention, the method may comprise identifying a geographical location of the coverage area for the at least one cell sector from the crowd-sourced data, and verifying whether the identified crowd-sourced geographical location of the coverage area for the at least one cell sector is within a threshold distance of a geographical location for the at least one cell sector as defined within the network configuration data therefor.

In one optional embodiment of the invention, the method may comprise identifying a geographical location representative of a central point within the coverage area of the at least once cell sector from the crowd-sourced data, determining a bearing from a geographical location of an antenna of the at least one cell sector as defined within the network configuration data to the identified geographical location representative of the central point within the coverage area of the at least one cell sector, and verifying whether the determined bearing is within a threshold amount of an azimuth for the antenna as defined within the network configuration data.

In one optional embodiment of the invention, the method may comprise identifying a geographical location representative of a central point within the coverage area of the at least one cell sector from the crowd-sourced data, determining a distance from a geographical location of an antenna of the at least one cell sector as defined based on the network configuration data to the identified geographical location representative of the central point within the coverage area of the at least one cell sector, and verifying whether the determined distance is consistent with a threshold distance. For example, the threshold distance may comprise at least one from a group comprising:
- a predefined, set distance;
- a calculated distance based at least partly on a defined transmit power level of an antenna of the at least one cell sector defined within the network configuration data;
- a calculated distance based at least partly on a defined vertical tilt angle of an antenna, or antenna beam, of the at least one cell sector defined within the network configuration data;
- a calculated distance based at least partly on an indication of a radius of the at least one cell sector provided within the crowd-source data; and
- a calculated distance based at least partly on an indication of a radius of the at least one cell sector defined within the network configuration data.

In one optional embodiment of the invention, the method may comprise requesting the crowd-sourced data from at least one third part database. For example, the crowd-sourced data may be obtained from at least one publicly available on-line database. Alternatively, the crowd-source data may be obtained from at least one proprietary third party database.

According to a second aspect of the invention, there is provided a network verification component arranged to perform antenna configuration verification within a cellular communication network, as set out in claim 6.

According to a third aspect of the invention, there is provided a non-transitory computer program product having computer-readable code stored thereon for programming a signal processing module to perform a method of determining incorrect antenna configuration within a cellular communication network, as set out in claim 7.

These and other aspects, features and advantages of the invention will be apparent from, and elucidated with reference to, the embodiments described hereinafter.

### Brief Description of the Drawings

Embodiments of the invention will be described, by way of example only, with reference to the accompanying drawings, in which:
FIG. 1 illustrates a simplified block diagram of an example of a communication system in a form of a third generation partnership project (3GPP™) UMTS™ network.
FIG's 2 to 7 illustrate simplified examples of a base station arranged to support a plurality of cell sectors.
FIG. 8 illustrates a simplified flowchart of an example of a method of determining incorrect antenna configuration within a cellular communication network.
FIG. 9 illustrates a simplified block diagram of a typical computing system that may be employed to implement signal processing functionality in embodiments of the invention.

### Detailed Description of Embodiments of the Invention

Examples of the invention will be described in terms of a method and apparatus for geolocating a wireless communication unit within a Universal Mobile Telecommunications System (UMTS™) cellular communication network. However, it will be appreciated by a skilled artisan that the inventive concept herein described may equally be implemented within cellular communication networks adapted in accordance with alternative wireless communication technologies and standards.

In a number of applications, a network configuration verification component adapted in accordance with examples of the invention effectively performs a method of determining incorrect antenna configuration within a cellular communication network. The method comprises obtaining crowd-sourced data comprising at least one geographical characteristic for at least one cell sector of the cellular communication system, verifying whether the at least one crowd-sourced geographical characteristic for the at least one cell sector is consistent with network configuration data for the at least one cell sector, and identifying a potentially incorrect antenna configuration for the at least one cell sector, if the at least one crowd-sourced geographical characteristic for the at least one cell sector is inconsistent with the network configuration data therefor.

In this manner, and as described in greater detail below, a network configuration verification component is described that enables errors within the layout and configuration of a cellular communication network to be detected using crowd-sourced data. Advantageously, such crowd-sourced data comprises data indicative of actual cell coverage, as experienced by wireless communications units within the cellular communication system, and which typically may be continuously updated without the need for expensive and time consuming drive tests to be performed using specialised test equipment. Accordingly, such crowd-sourced data may be used to provide an up-to-date indication of actual cell coverage with which network configuration data that defines intended network configuration may be compared to detect errors within the layout and configuration of the actual cellular communication network.

The term 'network configuration data' used herein is intended to encompass the details of the network configuration as originally determined by network-level simulations (for example prior to the network being deployed, updated or changed). Such data is often referred to as 'network planning data'. The term 'network configuration data' used herein is further intended to encompass details of the network as it is subsequently intended to be configured which, ideally, should agree with the network planning data , but may not do so due to, for example, manual and/or un-simulated changes made to parts of the network by the network operations staff. Such changes might include alterations to the tilt angle of one or more antennas or their respective beams to overcome a sector failure at a particular site or to improve capacity during an unscheduled event or incident (or some longer term issue).

Furthermore, the term 'incorrect antenna configuration' used herein is intended to refer to the situation where the actual antenna configuration differs from the details of the antenna configuration within the network configuration data. It will be appreciated that in some scenarios the actual antenna configuration may be the 'correct' configuration, with the details of the antenna configuration within the network configuration data being inaccurate. Thus, for clarity, references to determining incorrect antenna configuration used herein are intended to encompass determining inconsistent antenna configuration, whereby the actual antenna configuration may be correct, but inconsistent with (inaccurate) stored network configuration data.

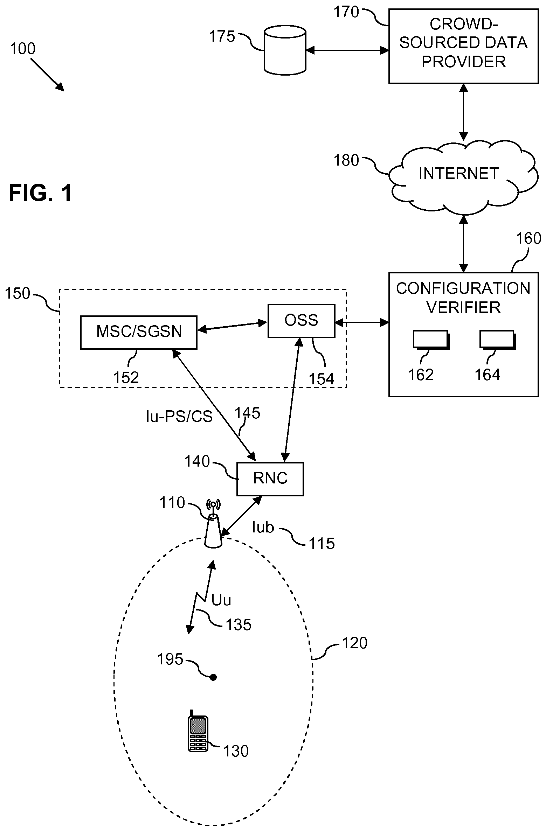

Referring now to the drawings, and in particular FIG. 1, an example of a simplified block diagram of a part of a cellular communication network is illustrated and indicated generally at 100. In FIG. 1, there is illustrated an example of a communication system in a form of a third generation partnership project (3GPP™) UMTS™ network 100 that comprises a plurality base stations, an example of such a base station being illustrated at 110. Each base station 110 is arranged to support one or more communication sectors, also known as cells, such as illustrated at 120. In a typical UMTS network, there may exist a mix of macro, micro and femto cells, comprising sectors of a range of different sizes. As such, it will be appreciated that base stations may comprise a mix of NodeBs and Home NodeBs (also known as femto access points). A wireless communication unit 130 located within a cell 120 is able to communicate with the base station 110 supporting that cell via an air interface (Uu) 135. Each base station 110 is operably coupled to a controller, such as the radio network controller (RNC) 140 to which the base station 110 is operably coupled via an lub interface 115. The RNC 140 is operably coupled to a core network 150 via an lu-PS interface and/or an lu-CS interface, as illustrated generally at 145. The core network 150 may comprise various network elements such as, in the illustrated example, one or more mobile switching centres (MSC) and/or Serving GPRS (General Packet Radio Service) Support Nodes (SGSN) 152 to which controllers such as the RNC 140 are operably coupled. The core network 150 in the illustrated example further comprises an operations support system (OSS) 154. The OSS 154 may be arranged to provide services such as maintaining network inventory, provisioning services, network component configuration, fault management, etc, and in the illustrated example is operably coupled to core network elements such as the MSC/SGSN, as well as to RNCs 140, for example by way of high speed network connections, such as Gigabit Ethernet connections or the like.

A network configuration verification component 160 is arranged to perform antenna configuration verification within the UMTS network 100, and in the illustrated example is operably coupled to the OSS 160. In this manner, the network configuration verification component 160 may be arranged to receive network configuration data from the OSS 154, for example upon request or by way of such data being 'pushed' thereto, for example periodically or upon one or more events such as a network configuration update etc. Alternatively, network configuration data may be provided to the network configuration verification component 160 by any alternative means, for example manually by way of a memory device containing such data (e.g. a USB Flash memory device, CD (compact disk) memory device, DVD (digital versatile disk) memory device, etc.). Accordingly, in some examples the network configuration verification component 160 need not be operably coupled to the OSS 154.

Such a network configuration verification component 160 may comprise an external system managed by a third party independent from the network operator responsible for the UMTS network 100. However, it is also contemplated that such a network configuration verification component 160 may comprise an integral part of the UMTS network 100, and thus be managed by the network operator. Accordingly, in some examples, the network configuration verification component 160 may form an integral part of, for example, the OSS 154.

In accordance with some example embodiments of the present invention, the network configuration verification component 160 comprises one or more signal processing modules, such as the signal processing module illustrated generally at 162, arranged to perform a method for determining incorrect antenna configuration within a cellular communication network. In particular, the signal processing module 162 of the network configuration verification component 160 of the illustrated example is arranged to perform a method of determining incorrect antenna configuration within the UMTS cellular communication network 100. The method comprises obtaining crowd-sourced data comprising at least one geographical characteristic for at least one cell sector of the cellular communication system, verifying whether the at least one crowd-sourced geographical characteristic for the at least one cell sector is consistent with network configuration data for the at least one cell sector, and identifying a potentially incorrect antenna configuration for the at least one cell sector if the at least one crowd-sourced geographical characteristic for the at least one cell sector is inconsistent with the network configuration data therefor. For example, the signal processing module 162 may be arranged to execute computer readable code stored within a memory element 164 arranged to program the signal processing module to perform a method for determining incorrect antenna configuration within a cellular communication network as herein described.

For example, crowd sourcing (the act of sourcing tasks to a large group of people or community (crowd)) has been used by various companies to build up location databases relating to, as an example, wireless coverage areas (e.g. cells, WLAN 'hotspots', etc.). Data obtained from large numbers of users of, for example, GPS enabled wireless communication units, over an extended period of time enables wireless coverage areas to be associated with accurate geographical location data. For example, geographical location data obtained from a GPS enabled wireless communication unit may be associated with, for example, one or more identifiers (e.g. a location area code and cell identifiers for a UMTS cell, or a service set identifier - SSID in the case of a wireless local area network (WLAN)) representing wireless coverage areas to which the GPS enabled wireless communication unit is connected, or which are visible to the GPS enabled wireless communication unit. Data obtained from large numbers of users of such units over an extended period of time may then be summarised to provide approximate geographical location data for each wireless coverage area for which data was received. For example, the geographical data associated with a particular wireless coverage area may be used to determine geographical characteristics for that particular wireless coverage area. Such geographical characteristics may comprise, for example, an indication of a central point of the geographical area (e.g. coordinates representing the centroid or other central characteristic therefor) and a radius therefor.

Such crowd-sourced data may be available from a number of sources, such as one or more third party databases, for example relevant databases maintained by Google™, Microsoft™ and Apple™, each of whom currently performs such crowd sourcing of location data. Such 3^{rd} party databases may be publicly accessible via, for example, the Internet. Alternatively, such databases may be proprietary and only available through subscription or some other arrangement with the proprietor thereof. For the illustrated example, the network configuration verification component 160 is illustrated as obtaining crowd-sourced geographical data from an on-line provider 170, over the Internet 180. For example, the network configuration verification component 160 may send a request to the on-line provider 170, via the Internet 180, for crowd-sourced geographical data for one or more cell sector(s) of the cellular communication network 100; for example such a request comprising the location area code and cell identifier for the, or each, cell sector. Upon receipt of such a request, the crowd-sourced data provider 170 may retrieve the requested data from a database 175 and return the retrieved data to the network configuration verification component 160.

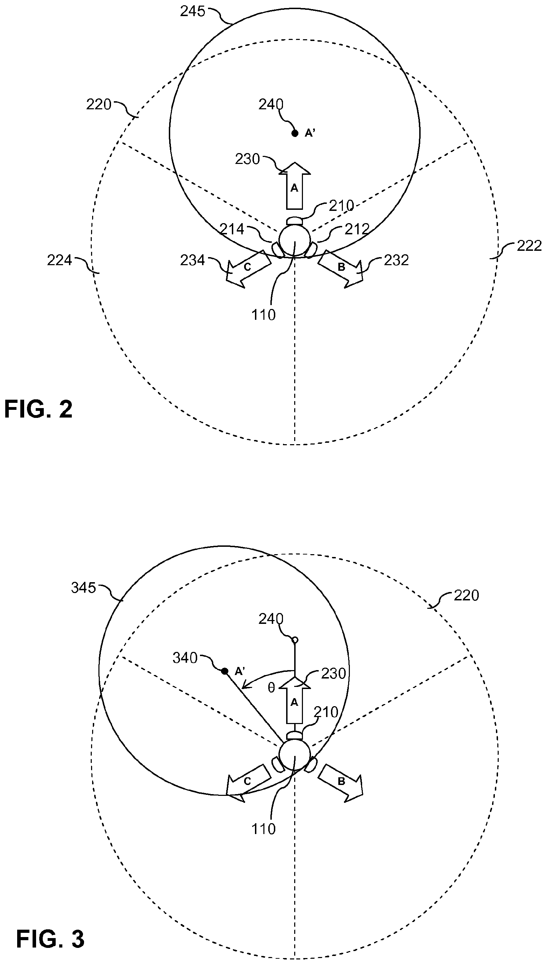

FIG's 2 to 7 illustrate simplified examples of the base station 110 arranged to support a plurality of cell sectors. The base station 110 comprises three antennas 210, 212, 214, each intended to support a cell sector comprising a coverage area illustrated generally at 220, 222, 224 by the broken lines. Typically, the coverage area of a cell sector is determined by the geographical location of the respective antenna 210, 212, 214, as well as also by the configuration of the antenna therefor, and in particular is typically dependent on factors such as an azimuth of an antenna 'beam', for example as illustrated generally at 230, 232, 234 in FIG. 2, a beamwidth of the antenna beam 230, 232, 234, a transmit power level of the antenna 210, 212, 214, a height of the antenna above its surroundings, a downtilt angle of the antenna (mechanical downtilt) from the horizontal and/or a downtilt angle of the antenna beam (electrical downtilt) from the horizontal, etc. For clarity, the term 'azimuth' used herein refers to the angle (e.g. in degrees clockwise) from, say, North at which a centre of the antenna (beam) points. Furthermore, the term 'beamwidth' used herein refers to the angle (e.g. in degrees) over which the antenna beam spreads its signal. Typically, factors such as the geographical location of the antenna, the azimuth of the antenna beam 230, 232, 234, the transmit power level of the antenna 210, 212, 214, height of the antenna above its surroundings, downtilt angle of the antenna and/or antenna beam from the horizontal etc. may be defined within the network configuration data for the respective cell sector 220, 222, 224.

As mentioned above, the network configuration verification component 160 is arranged to obtain crowd-sourced data comprising at least one geographical characteristic for at least one cell sector of the cellular communication system, for example from the crowd-sourced data provider 170 illustrated in FIG. 1. The network configuration verification component 160 is then arranged to verify whether the at least one crowd-sourced geographical characteristic for the at least one cell sector is consistent with network configuration data for the at least one cell sector.

As also mentioned above, network configuration data for the UMTS network 100 may be obtained directly from the OSS 154 or by any other suitable means, and may comprise information defining intended characteristics for the or each cell sector such as the geographical location of the antenna therefor, the azimuth of the antenna beam 230, 232, 234, the transmit power level of the antenna 210, 212, 214, the height of the antenna above its surroundings, the downtilt angle of the antenna and/or antenna beam from the horizontal etc.

As also mentioned above, the crowd-sourced data comprises at least one geographical characteristic for at least one cell sector. For example, the crowd-sourced data may comprise an indication of a geographical location of a coverage area for a cell sector. For example, such crowd-sourced data may comprise an indication of a geographical location representative of a substantially central point within a coverage area of the cell sector; such as a grid-reference or other similar point of reference. Such crowd-sourced data may further comprise an indication of a radius of the coverage area of the cell sector. In this manner, the crowd-sourced data may provide an indication of the geographical location of a coverage area for a cell sector in terms of a relatively specific central point for the coverage area, such as illustrated at 240 in FIG. 2, and additionally a more general, substantially circular footprint for the coverage area (i.e. as defined by the radius therefor), as illustrated at 245 in FIG. 2. It will be appreciated that the geographical characteristic of a cell sector provided within the crowd-sourced data may be provided in any suitable format, for example comprising longitude and latitude coordinates conforming to the World Geodetic System or the like. Specifically, it is contemplated that any suitable format for identifying the approximate geographical location of the coverage area of the cell sector may be used, for example whether such format identifies a central point and/or radius of the coverage area, or simply provides a more general indication of the location of the cell sector 'footprint'.

Thus, having obtained the crowd-sourced data, the network configuration verification component 160 may identify a geographical location of the coverage area for the cell sector(s) from the crowd-sourced data, and verify whether the identified crowd-sourced geographical location of the coverage area for the (or each) cell sector is consistent with a geographical location for the (or each) cell sector as defined within the network configuration data therefor.

For example, the network configuration verification component 160 may be arranged to identify a geographical location representative of a central point within the coverage area of the cell sector from the crowd-sourced data, determine a bearing from a geographical location of the antenna of the cell sector, as defined within the network configuration data, to the identified geographical location representative of the central point within the coverage area of the cell sector, and verify whether the determined bearing is consistent with an azimuth for the antenna as defined within the network configuration data. For example, as illustrated in FIG. 2, the antenna beam 230 of the antenna 210 may be intended to have, and thus is defined within the network configuration data as having, an azimuth of 0°. In this illustrated example, a bearing from a geographical location of the antenna 210 of the cell sector 220 to the central point 240 within the coverage area of the cell sector 220 as identified by the crowd-sourced data is also substantially 0°. Accordingly, for the example illustrated in FIG. 2, the identified crowd-sourced geographical location of the coverage area for the cell sector 220 is consistent with the geographical location for the cell sector 220 as defined within the network configuration data therefor; at least in terms of the azimuth therefor.

By contrast, FIG. 3 illustrates an example where the antenna 210 has been configured to comprise an incorrect azimuth. Accordingly, in the example illustrated in FIG. 3, the crowd-sourced data may indicate the geographical location of a central point for the coverage area of the cell sector 220 as being located at 340, as opposed to at 240 as was the case in FIG. 2. Accordingly, a bearing from the geographical location of the antenna 210 of the cell sector 220 to the central point 340 within the coverage area of the cell sector 220 as identified by the crowd-sourced data will differ from the azimuth of 0°, as defined within the network configuration data by, in the illustrated example, an angle of θ°. If the angle θ° exceeds, say, a predetermined threshold, it may be determined that the bearing from the geographical location of the antenna 210 of the cell sector 220 to the central point 340 within the coverage area of the cell sector 220 as identified by the crowd-sourced data is inconsistent with the azimuth for the antenna as defined within the network configuration data, and thus it may be determined that the antenna configuration for the cell sector 220 is incorrect, or at least inconsistent with the network configuration data.

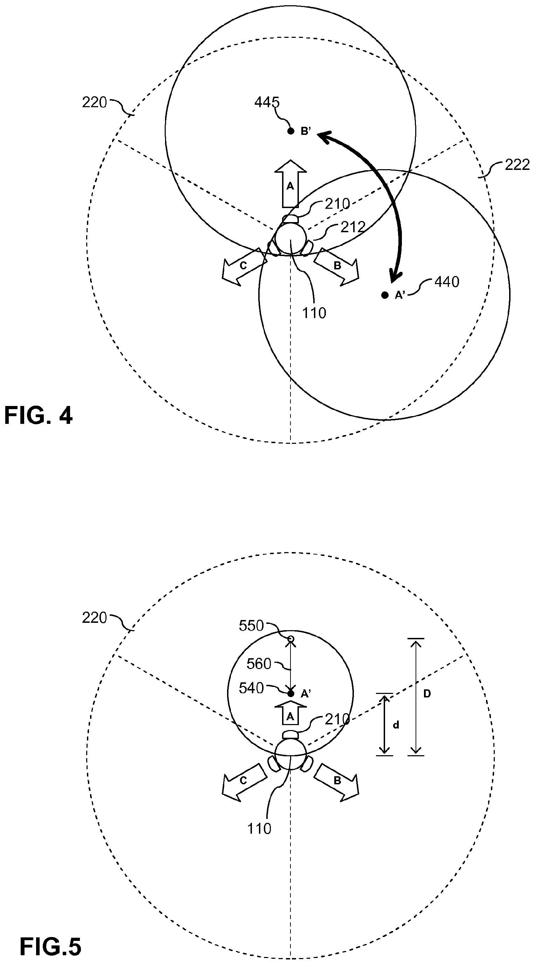

FIG. 4 illustrates a further example of incorrect antenna configuration that may be detected using crowd-sourced data in accordance with some examples of the present invention. In the example illustrated in FIG. 4, a sector 'swap' has occurred whereby the cell sectors 220, 222 have been incorrectly configured on each other's antennas 210, 212. Thus, upon verifying whether the crowd-sourced geographical characteristic(s) for the coverage areas of the two cell sectors 220, 222 are consistent with network configuration data therefor, the network configuration verification component 160 may identify that (at least) the bearing from the geographical location of the respective antenna 210, 212 of the respective cell sector 220, 222 to a central point 440, 445 within the coverage area of the respective cell sector 220, 222 as identified by the crowd-sourced data is inconsistent with the respective azimuth as defined within the network configuration data. By performing a cross-comparison of the respective bearings, it may become apparent that a sector swap has occurred.

The present invention is not limited to enabling the detection of incorrect azimuth configurations for antennas. For example, the network configuration verification component 160 may additionally/alternatively be arranged to determine a distance from the geographical location of the antenna of a cell sector as defined based on the network configuration data to the identified geographical location representative of the central point within the coverage area of the at least one cell sector, and to verify whether the determined distance is consistent with, say, a threshold distance.

For example, in the example illustrated in FIG. 5, a transmit power level for the cell sector 220 has been incorrectly configured to a lower power level than required/intended. The network configuration verification component 160 may be arranged to identify a geographical location representative of a central point 540 within the coverage area of the cell sector 220 from the crowd-sourced data. The network configuration verification component 160 may then determine a distance 'd' from a geographical location of the antenna 210 as defined within the network configuration data (e.g. based on a geographical location of the base transceiver station 110 therefor) to the geographical location representative of the central point 540 within the coverage area of the cell sector 220 determined from the crowd-sourced data. The network configuration verification component 160 may then verify whether the determined distance 'd' is consistent with the network configuration data for the cell sector 220.

For example, the network configuration verification component 160 may be arranged to verify whether the determined distance 'd' between the central point 540 within the coverage area of the cell sector 220 and the geographical location of the antenna 210 is less than a threshold distance, whereby such a threshold distance comprises, say, a calculated distance based at least partly on a defined transmit power level for the antenna 210 of the cell sector 220 defined within the network configuration data. For example, the network configuration verification component 160 may calculate an expected distance 'D' between the antenna 210 and an expected central point 550 within the coverage area of the cell sector 220 based on, say, a transmit power level for the cell sector 220 defined within the network configuration data. The network verification component 160 may then compare this expected distance 'D' to the determined distance 'd' (determined from the crowd-sourced data). If the two distances differ by more than a certain amount (e.g. by more than a predefined amount) then the network configuration component 160 may identify that the geographical location of the central point 540 within the coverage area of the cell sector 220, as identified by the crowd-sourced data, is inconsistent with the expected distance from the antenna 210 based on the transmit power for the antenna 210 as defined within the network configuration data.

Thus, in the example illustrated in FIG. 5, the network configuration verification component 160 may detect the incorrectly low transmit power level for the antenna 210 if a difference 560 between the crowd-sourced central point 540 of the cell sector 220 and the expected central point 550 of the cell sector 220 is greater than a predefined amount.

In some examples of the invention, the network configuration verification component 160 may additionally/alternatively be arranged to verify whether the determined distance from the antenna 210 of the cell sector 220 to the central point 540 within the coverage area of the cell sector 220 (as defined by the crowd-sourced data) is consistent with a threshold distance, wherein such a threshold distance comprises one or more of:
- a predefined, set distance (e.g. wherein the network configuration verification component 160 verifies whether the determined distance is less than and/or greater than a set maximum and/or minimum threshold distance);
- a calculated distance based at least partly on an indication of a radius of the at least one cell sector provided within the crowd-source data; and
- a calculated distance based at least partly on an indication of a radius of the at least one cell sector defined within the network configuration data.

For example, referring back to FIG. 5, the network configuration verification component 160 may additionally/alternatively detect such a low transmit power level for the antenna 210 based on, for example, a footprint size of the coverage area of the cell sector 220 as indicated by the crowd-sourced data. For example, the network configuration verification component 160 may be arranged to calculate an indication of an expected size of coverage area for the cell sector 220 based at least partly on, say, the transmit power level defined within the network configuration data, such as an expected radius of the coverage area for the cell sector 220 (e.g. the distance from the antenna 210 to an expected central point 550 of the coverage area). The network configuration verification component 160 may further be arranged to determine a size of coverage area for the cell sector 220 as indicated by the crowd-sourced data. For example, the crowd-sourced data may comprise an indication of a radius for the coverage area of the cell sector 220. The network configuration verification component 160 may thus detect such a low transmit power level if the radius for the coverage area calculated from the transmit power level defined within the network configuration data is greater than (e.g. by more than a predefined threshold amount) the radius for the coverage area determined from the crowd-sourced data. Similarly, the network configuration verification component 160 may detect a high transmit power level if the radius for the coverage area calculated from the transmit power level defined within the network configuration data is less than (e.g. by more than a predefined threshold amount) the radius for the coverage area determined from the crowd-sourced data.

In some examples of the invention, the network configuration verification component 160 may additionally/alternatively be arranged to verify whether the determined distance from the antenna 210 of the cell sector 220 to the central point 540 within the coverage area of the cell sector 220 (as defined by the crowd-sourced data) is consistent with a threshold distance, wherein such a threshold distance comprises a calculated distance based at least partly on a defined vertical tilt angle of the antenna 210, or its respective beam 230, of the cell sector defined within the network configuration data.

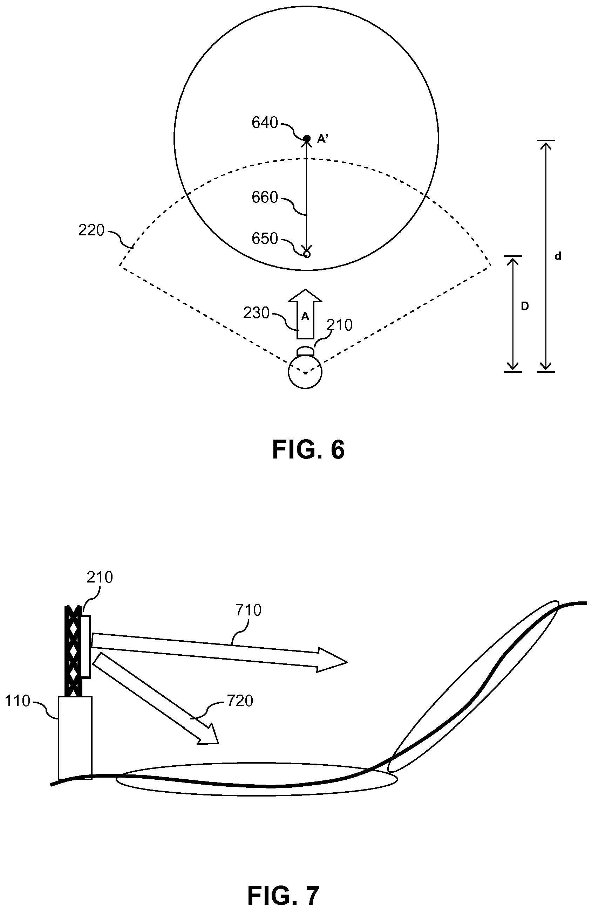

For example, in the example illustrated in FIG. 6, a vertical tilt angle of the antenna 210, or its respective beam 230, for the cell sector 220 has been incorrectly configured to a higher angle than required/intended. The network configuration verification component 160 may be arranged to identify a geographical location representative of a central point 640 within the coverage area of the cell sector 220 from the crowd-sourced data. The network configuration verification component 160 may then determine a distance 'd' from a geographical location of the antenna 210 as defined within the network configuration data to the geographical location representative of the central point 640 within the coverage area of the cell sector 220 determined from the crowd-sourced data. The network configuration verification component 160 may then verify whether the determined distance 'd' between the central point 640 within the coverage area of the cell sector 220 determined from the crowd-sourced data and the geographical location of the antenna 210 is less than a threshold distance, whereby such a threshold distance comprises a distance calculated based at least partly on a defined vertical tilt angle of the antenna 210, or its respective beam 230, for the cell sector 220 defined within the network configuration data. For example, the network verification component 160 may calculate an expected distance 'D' between the antenna 210 and an expected central point 650 within the coverage area of the cell sector 220 based on (at least), say, a vertical tilt angle for the antenna 210, or its respective beam 230, defined within the network configuration data. The network configuration component 160 may then compare this expected distance 'D' to the determined distance 'd' (determined from the crowd-sourced data). If the two distances differ by more than a certain amount (e.g. by more than a predefined amount) then the network configuration component 160 may identify that the geographical location of the central point 640 within the coverage area of the cell sector 220, as identified by the sourced data, is inconsistent with the expected distance from the antenna 210 based on the transmit power for the antenna 210 as defined within the network configuration data.

Thus, in the example illustrated in FIG. 6, the network configuration verification component 160 may detect the incorrectly high vertical tilt angle for the antenna 210, or its respective beam 230, if the difference 660 between the crowd-sourced central point 640 of the cell sector 220 and the expected central point 650 of the cell sector 20 is greater than a predefined amount.

This ability to detect incorrect configuration of the vertical tilt-angle of an antenna or its respective beam(s) is particularly advantageous where vertical sectorisation is used. Vertical sectorisation is a method of sub-dividing a cell by forming two beams from a single antenna in a single horizontal (azimuth) sector as illustrated in FIG. 7, or by using two separate antennas in the same, or substantially, the same, azimuth sector. In the former case illustrated in FIG. 7, where only a single antenna is used, vertical sectorisation may most easily be achieved using an active antenna system (AAS). An AAS is an antenna system in which some or all of the base-station electronics are located within the antenna housing itself. Most AASs employ multiple antenna elements and multiple transceivers, along with a beamforming/steering capability. It is this latter capability that enables the forming of multiple beams with different traffic being able to be directed to each beam.

As illustrated in FIG. 7, two separate beams 710, 720 may be formed with different traffic being directed toward each beam. To all intents and purposes, each beam 710, 720 is emanating from a separate 'virtual' antenna, although they are both actually emanating from the same physical antenna 210. The two beams may be steered in different (vertical) directions such that the upper beam 710 serves the further parts of the cell coverage and the lower beam 720 serves the parts of the cell coverage closest to the antenna 210. One application of vertical sectorisation is in better covering hilly terrain, as illustrated in FIG. 7, whereby the upper slopes of a hill are covered by the upper beam 710 and the lower slopes are covered by the lower beam 720.

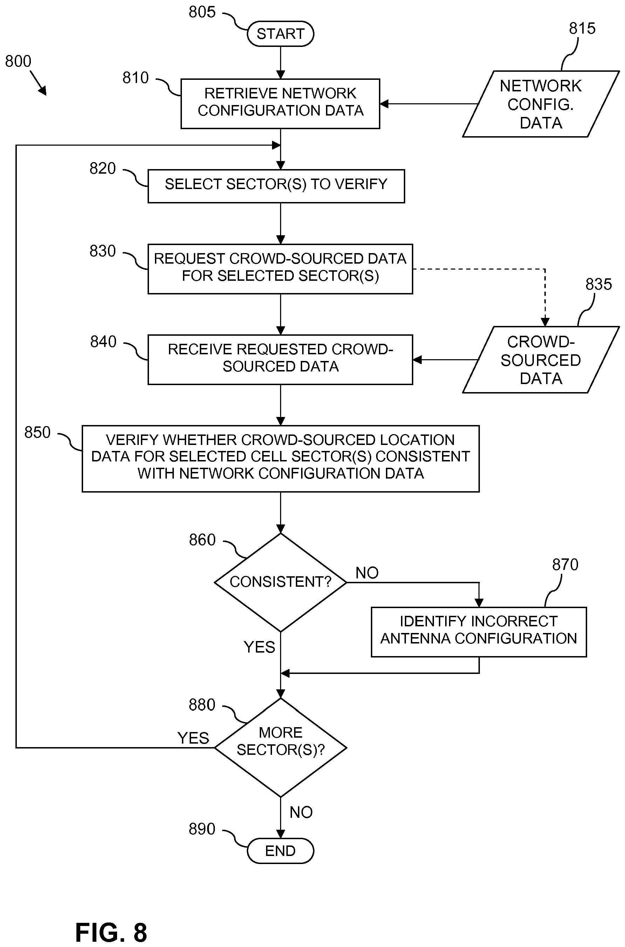

Referring now to FIG. 8, there is illustrated a simplified flowchart 800 of an example of a method of determining incorrect antenna configuration within a cellular communication network, such as may be implemented within the network configuration verification component 160 of FIG. 1. The method starts at 805, and moves on to step 810 with the retrieval of network configuration data. Next, at step 820, one or more cell sectors for which antenna configuration is to be verified are selected. The method then moves on to step 830, where crowd-sourced data 835 is requested for the selected sector(s), for example from the crowd-sourced data provided 170 illustrated in FIG. 1. Upon receipt of the requested crowd-sourced data, at step 840, the method moves on to step 850, where the method comprises verifying whether one or more crowd-sourced geographical characteristic(s) of a coverage area of the selected cell sector(s) is/are consistent with network configuration data for the selected cell sector(s). If, at step 860, it is determined that at least one crowd-sourced geographical characteristic for a coverage area of a selected cell sector is inconsistent with the network configuration data therefor, the method moves on to step 870, where a potentially incorrect antenna configuration for that cell sector is identified (e.g. by way of an error report being generated). The method then moves on to step 880, where it is determined whether antenna configuration is required to be verified for one or more further cell sectors. If it is determined that antenna configuration is required for one or more further cell sectors, the method loops back to step 820, where one or more further sectors are selected. Conversely, if it is determined that antenna configuration is not required for further cell sectors, the method ends at 890.

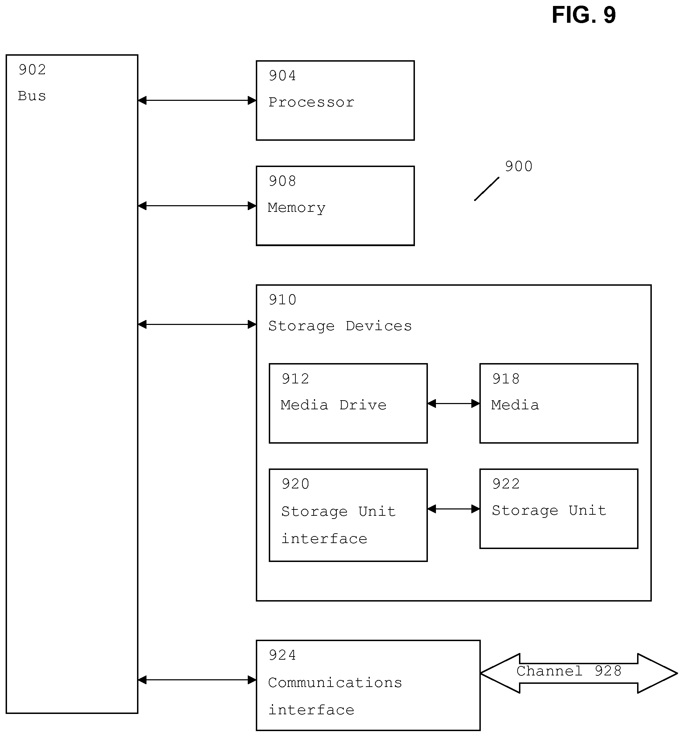

Referring now to FIG. 9, there is illustrated a typical computing system 900 that may be employed to implement signal processing functionality in embodiments of the invention. For example, a computing system of this type may be used within the network configuration verification component 160 of FIG. 1. Those skilled in the relevant art will also recognize how to implement the invention using other computer systems or architectures. Computing system 900 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 900 can include one or more processors, such as a processor 904. Processor 904 can be implemented using a general or special-purpose processing engine such as, for example, a microprocessor, microcontroller or other control module. In this example, processor 904 is connected to a bus 902 or other communications medium.

Computing system 900 can also include a main memory 908, such as random access memory (RAM) or other dynamic memory, for storing information and instructions to be executed by processor 904. Main memory 908 also may be used for storing temporary variables or other intermediate information during execution of instructions to be executed by processor 904. Computing system 900 may likewise include a read only memory (ROM) or other static storage device coupled to bus 902 for storing static information and instructions for processor 904.

The computing system 900 may also include information storage system 910, which may include, for example, a media drive 912 and a removable storage interface 920. The media drive 912 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 918 may include, for example, a hard disk, floppy disk, magnetic tape, optical disk, CD or DVD, or other fixed or removable medium that is read by and written to by media drive 912. As these examples illustrate, the storage media 918 may include a computer-readable storage medium having particular computer software or data stored therein.

In alternative embodiments, information storage system 910 may include other similar components for allowing computer programs or other instructions or data to be loaded into computing system 900. Such components may include, for example, a removable storage unit 922 and an interface 920, such as a program cartridge and cartridge interface, a removable memory (for example, a flash memory or other removable memory module) and memory slot, and other removable storage units 922 and interfaces 920 that allow software and data to be transferred from the removable storage unit 918 to computing system 900.

Computing system 900 can also include a communications interface 924. Communications interface 924 can be used to allow software and data to be transferred between computing system 900 and external devices. Examples of communications interface 924 can include a modem, a network interface (such as an Ethernet or other NIC card), a communications port (such as for example, a universal serial bus (USB) port), a PCMCIA slot and card, etc. Software and data transferred via communications interface 924 are in the form of signals which can be electronic, electromagnetic, and optical or other signals capable of being received by communications interface 924. These signals are provided to communications interface 924 via a channel 928. This channel 928 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms 'computer program product' 'computer-readable medium' and the like may be used generally to refer to media such as, for example, memory 908, storage device 918, or storage unit 922. These and other forms of computer-readable media may store one or more instructions for use by processor 904, to cause the processor to perform specified operations. Such instructions, generally referred to as 'computer program code' (which may be grouped in the form of computer programs or other groupings), when executed, enable the computing system 900 to perform functions of embodiments of the present invention. Note that the code may directly cause the processor to perform specified operations, be compiled to do so, and/or be combined with other software, hardware, and/or firmware elements (e.g. libraries for performing standard functions) to do so.

As used herein, the expression non-transitory will be understood to refer to the nonephemeral nature of the storage medium itself rather than to a notion of how long the stored information itself may persist in a stored state. Accordingly, memories that might otherwise be viewed, for example, as being volatile (such as many electronically-erasable programmable read-only memories (EPROM's) or random-access memories (RAM's)) are nevertheless to be viewed here as being "non-transitory" whereas a signal carrier in transit is to be considered "transitory" notwithstanding that the signal may remain in transit for a lengthy period of time. Specifically, a non-transitory computer program product may comprise one or more of a hard disk, a CD-ROM, an optical storage device, a magnetic storage device, a Read Only Memory, ROM, a Programmable Read Only Memory, PROM, an Erasable Programmable Read Only Memory EPROM, EPROM, an Electrically Erasable Programmable Read Only Memory, EEPROM, and a Flash memory.

In an embodiment where the elements are implemented using software, the software may be stored in a computer-readable medium and loaded into computing system 900 using, for example, removable storage drive 922, drive 912 or communications interface 924. The control module (in this example, software instructions or computer program code), when executed by the processor 904, causes the processor 904 to perform the functions of the invention as described herein.

Furthermore, the inventive concept can be applied to any signal processing circuit. It is further envisaged that, for example, a semiconductor manufacturer may employ the inventive concept in a design of a stand-alone device, such as a microcontroller, digital signal processor, or application-specific integrated circuit (ASIC) and/or any other sub-system element.

It will be appreciated that, for clarity purposes, the above description has described embodiments of the invention with reference to different functional units and processors. However, it will be apparent that any suitable distribution of functionality between different functional units or processors may be used without detracting from the invention. For example, functionality illustrated to be performed by the same processor or controller may be performed by separate processors or controllers. Hence, references to specific functional units are only to be seen as references to suitable means for providing the described functionality, rather than indicative of a strict logical or physical structure or organization.

Aspects of the invention may be implemented in any suitable form including hardware, software, firmware or any combination of these. The invention may optionally be implemented, at least partly, as computer software running on one or more data processors and/or digital signal processors or configurable module components such as FPGA devices. Thus, the elements and components of an embodiment of the invention may be physically, functionally and logically implemented in any suitable way. Indeed, the functionality may be implemented in a single unit, in a plurality of units or as part of other functional units.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Thus, an improved method and apparatus for determining incorrect antenna configuration within a cellular communication network have been described, wherein the aforementioned disadvantages with prior art arrangements have been substantially alleviated.

## Claims

1. A method (800) of determining incorrect antenna configuration performed by a network configuration verification component (160) of a cellular communication network (100), the method comprising:
obtaining (830, 840) crowd-sourced data (835) comprising an indication of a central point within a coverage area of a cell sector (220, 222, 224) of the cellular communication system (100),
the crowd-sourced data (835) comprising data indicative of actual cell coverage as experienced by a plurality of wireless communication units (130), and
the indication of the central point within the coverage area of the cell sector (220, 222, 224) being based on the actual cell coverage as experienced by the plurality of wireless communication units (130);
determining a distance, d, between the central point within the coverage area of the cell sector (220, 222, 224) and a geographic location of an antenna (210) of the cell sector (220, 222, 224);
calculating an expected distance, D, between an expected central point within the coverage area of the cell sector (220, 222, 224) and the geographic location of the antenna (210);
verifying (850) whether a difference between the determined distance, d, and the expected distance, D, is more than a threshold value; and
identifying (870) a potentially incorrect antenna configuration for the cell sector (220, 222, 224) if the difference between the determined distance, d, and the expected distance, D, is more than the threshold value.

2. The method of Claim 1 wherein the threshold value comprises at least one from a group comprising:
a predefined, set distance; and
a calculated distance based at least partly on a defined transmit power level of the antenna (210) of the cell sector (220) defined within the network configuration data.

3. The method of any one of the preceding Claims wherein the method comprises requesting the crowd-sourced data (835) from at least one third party database.

4. The method of Claim 3 wherein the crowd-sourced data (835) is obtained from at least one publicly available on-line database (175).

5. The method of Claim 3 wherein the crowd-sourced data (835) is obtained from at least one proprietary third party database.

6. A network configuration verification component (160) arranged to perform antenna configuration verification within a cellular communication network (100), the network configuration verification component (160) comprising at least one signal processing module (162) arranged to:
obtain (830, 840) crowd-sourced data (835) comprising an indication of a central point within a coverage area of a cell sector (220, 222, 224) of the cellular communication system (100),
the crowd-sourced data (835) comprising data indicative of actual cell coverage as experienced by a plurality of wireless communication units (130), and
the indication of the central point within the coverage area being based on the actual cell coverage as experienced by the plurality of wireless communication units (130);
determine a distance, d, between the central point within the coverage area of the cell sector (220, 222, 224) and a geographic location of an antenna (210) of the cell sector (220, 222, 224);
calculate an expected distance, D, between an expected central point within the coverage area of the cell sector (220, 222, 224) and the geographic location of the antenna (210);
verify whether a difference between the determined distance, d, and the expected distance, D, is more than a threshold value; and
identify a potentially incorrect antenna configuration for the cell sector (220, 222, 224) if the difference between the determined distance, d, and the expected distance, D, is more than the threshold value.

7. A non-transitory computer program product having computer-readable code stored thereon for programming a signal processing module (162) to perform a method of determining incorrect antenna configuration within a cellular communication network (100), the code operable for:
obtaining crowd-sourced data (835) comprising an indication of a central point within a coverage area of a cell sector (220, 222, 224) of the cellular communication system (100),
the crowd-sourced data (835) comprising data indicative of actual cell coverage as experienced by a plurality of wireless communication units (130), and
the indication of the central point within the coverage area of the cell sector (220, 222, 224) being based on the actual cell coverage as experienced by the plurality of wireless communication units (130);
determining a distance, d, between the central point within the coverage area of the cell sector (220, 222, 224) and a geographic location of an antenna (210) of the cell sector (220, 222, 224);
calculating an expected distance, D, between an expected central point within the coverage area of the cell sector (220, 222, 224) and the geographic location of the antenna (210);
verifying whether a difference between the determined distance, d, and the expected distance, D, is more than a threshold value; and
identifying (870) a potentially incorrect antenna configuration for the cell sector (220, 222, 224) if the difference between the determined distance, d, and the expected distance, D, is more than the threshold value.

## Patentansprüche

1. Ein Verfahren (800) zum Bestimmen inkorrekter Antennenkonfiguration, das von einer Netzwerkkonfigurationsverifizierungskomponente (160) eines Mobilfunkkommunikationsnetzwerks (100) durchgeführt wird, wobei das Verfahren Folgendes beinhaltet:
Erhalten (830, 840) von crowd-sourced Daten (835), die eine Angabe eines zentralen Punktes innerhalb eines Abdeckungsbereichs eines Zellsektors (220, 222, 224) des Mobilfunkkommunikationssystems (100) beinhalten,
wobei die crowd-sourced Daten (835) Daten beinhalten, die eine tatsächliche Zellabdeckung angeben, wie sie eine Vielzahl von drahtlosen Kommunikationseinheiten (130) erfährt und
wobei die Angabe des zentralen Punktes innerhalb des Abdeckungsbereichs des Zellsektors (220, 222, 224) auf der tatsächlichen Zellabdeckung basiert, wie sie die Vielzahl von drahtlosen Kommunikationseinheiten (130) erfährt;
Bestimmen einer Distanz, d, zwischen dem zentralen Punkt innerhalb des Abdeckungsbereichs des Zellsektors (220, 222, 224) und einem geographischen Standort einer Antenne (210) des Zellsektors (220, 222, 224);
Berechnen einer erwarteten Distanz, D, zwischen einem erwarteten zentralen Punkt innerhalb des Abdeckungsbereichs des Zellsektors (220, 222, 224) und dem geographischen Standort der Antenne (210);
Verifizieren (850), ob eine Differenz zwischen der bestimmten Distanz, d, und der erwarteten Distanz, D, höher als ein Schwellenwert ist; und
Identifizieren (870) einer potenziell inkorrekten Antennenkonfiguration für den Zellsektor (220, 222, 224), falls die Differenz zwischen der bestimmten Distanz, d, und der erwarteten Distanz, D, höher als der Schwellenwert ist.

2. Verfahren gemäß Anspruch 1, wobei der Schwellenwert mindestens eines aus einer Gruppe beinhaltet, die Folgendes beinhaltet:
eine vordefinierte, festgelegte Distanz; und
eine berechnete Distanz, die mindestens teilweise auf einem definierten Sendeleistungspegel der Antenne (210) des in den Netzwerkkonfigurationsdaten definierten Zellsektors (220) basiert.

3. Verfahren gemäß einem der vorhergehenden Ansprüche, wobei das Verfahren das Anfordern der crowd-sourced Daten (835) von mindestens einer Drittpartei-Datenbank beinhaltet.

4. Verfahren gemäß Anspruch 3, wobei die crowd-sourced Daten (835) von mindestens einer öffentlich zugänglichen Online-Datenbank (175) erhalten werden.

5. Verfahren gemäß Anspruch 3, wobei die crowd-sourced Daten (835) von mindestens einer proprietären Drittpartei-Datenbank erhalten werden.

6. Eine Netzwerkkonfigurationsverifizierungskomponente (160), die zum Durchführen einer Antennenkonfigurationsverifizierung innerhalb eines Mobilfunkkommunikationsnetzwerks (100) eingerichtet ist, wobei die Netzwerkkonfigurationsverifizierungskomponente (160) mindestens ein Signalverarbeitungsmodul (162) beinhaltet, das für Folgendes eingerichtet ist:
Erhalten (830, 840) von crowd-sourced Daten (835), die eine Angabe eines zentralen Punktes innerhalb eines Abdeckungsbereichs eines Zellsektors (220, 222, 224) des Funkmobilkommunikationsnetzwerks (100) beinhalten,
wobei die crowd-sourced Daten (835) Daten beinhalten, die eine tatsächliche Zellabdeckung angeben, wie sie eine Vielzahl von drahtlosen Kommunikationseinheiten (130) erfährt und
wobei die Angabe des zentralen Punktes innerhalb des Abdeckungsbereichs auf der tatsächlichen Zellabdeckung basiert, wie sie die Vielzahl von drahtlosen Kommunikationseinheiten (130) erfährt;
Bestimmen einer Distanz, d, zwischen dem zentralen Punkt innerhalb des Abdeckungsbereichs des Zellsektors (220, 222, 224) und einem geographischen Standort einer Antenne (210) des Zellsektors (220, 222, 224);
Berechnen einer erwarteten Distanz, D, zwischen einem erwarteten zentralen Punkt innerhalb des Abdeckungsbereichs des Zellsektors (220, 222, 224) und dem geographischen Standort der Antenne (210);
Verifizieren, ob eine Differenz zwischen der bestimmten Distanz, d, und der erwarteten Distanz, D, höher als ein Schwellenwert ist; und
Identifizieren einer potenziell inkorrekten Antennenkonfiguration für den Zellsektor (220, 222, 224), falls die Differenz zwischen der bestimmten Distanz, d, und der erwarteten Distanz, D, höher als der Schwellenwert ist.

7. Ein nicht transitorisches Computerprogrammprodukt, das darauf gespeichert einen computerlesbaren Code zum Programmieren eines Signalverarbeitungsmoduls (162) zum Durchführen eines Verfahrens zum Bestimmen inkorrekter Antennenkonfiguration innerhalb eines Mobilfunkkommunikationsnetzwerks (100) aufweist, wobei der Code für Folgendes betriebsfähig ist:
Erhalten von crowd-sourced Daten (835), die eine Angabe eines zentralen Punktes innerhalb eines Abdeckungsbereichs eines Zellsektors (220, 222, 224) des Mobilfunkkommunikationsnetzwerks (100) beinhalten,
wobei die crowd-sourced Daten (835) Daten beinhalten, die eine tatsächliche Zellabdeckung angeben, wie sie eine Vielzahl von drahtlosen Kommunikationseinheiten (130) erfährt und
wobei die Angabe des zentralen Punktes innerhalb des Abdeckungsbereichs des Zellsektors (220, 222, 224) auf der tatsächlichen Zellabdeckung basiert, wie sie die Vielzahl von drahtlosen Kommunikationseinheiten (130) erfährt;
Bestimmen einer Distanz, d, zwischen dem zentralen Punkt innerhalb des Abdeckungsbereichs des Zellsektors (220, 222, 224) und einem geographischen Standort einer Antenne (210) des Zellsektors (220, 222, 224);
Berechnen einer erwarteten Distanz, D, zwischen einem erwarteten zentralen Punkt innerhalb des Abdeckungsbereichs des Zellsektors (220, 222, 224) und dem geographischen Standort der Antenne (210);
Verifizieren, ob eine Differenz zwischen der bestimmten Distanz, d, und der erwarteten Distanz, D, mehr als ein Schwellenwert ist; und
Identifizieren (870) einer potenziell inkorrekten Antennenkonfiguration für den Zellsektor (220, 222, 224), falls die Differenz zwischen der bestimmten Distanz, d, und der erwarteten Distanz, D, mehr als der Schwellenwert ist.

## Revendications

1. Un procédé (800) de détermination d'une configuration d'antenne incorrecte réalisée par un composant de vérification de configuration de réseau (160) d'un réseau de communication cellulaire (100), le procédé comprenant :
l'obtention (830, 840) de données participatives (835) comprenant une indication d'un point central au sein d'une zone de couverture d'un secteur de cellule (220, 222, 224) du système de communication cellulaire (100),
les données participatives (835) comprenant des données indicatives d'une couverture réelle de cellule telle que la connaît une pluralité d'unités de communication sans fil (130), et
l'indication du point central au sein de la zone de couverture du secteur de cellule (220, 222, 224) étant basée sur la couverture réelle de cellule telle que la connaît la pluralité d'unités de communication sans fil (130) ;
la détermination d'une distance, d, entre le point central au sein de la zone de couverture du secteur de cellule (220, 222, 224) et un emplacement géographique d'une antenne (210) du secteur de cellule (220, 222, 224) ;
le calcul d'une distance escomptée, D, entre un point central escompté au sein de la zone de couverture du secteur de cellule (220, 222, 224) et l'emplacement géographique de l'antenne (210) ;
la vérification (850) quant à savoir si une différence entre la distance déterminée, d, et la distance escomptée, D, est supérieure à une valeur seuil ; et
l'identification (870) d'une configuration d'antenne potentiellement incorrecte pour le secteur de cellule (220, 222, 224) si la différence entre la distance déterminée, d, et la distance escomptée, D, est supérieure à la valeur seuil.

2. Le procédé de la revendication 1 dans lequel la valeur seuil comprend au moins un élément d'un groupe comprenant :
une distance prédéfinie, fixée ; et
une distance calculée basée au moins en partie sur un niveau de puissance d'émission défini de l'antenne (210) du secteur de cellule (220) défini au sein des données de configuration de réseau.

3. Le procédé de n'importe lesquelles des revendications précédentes, le procédé comprenant la demande des données participatives (835) auprès d'au moins une base de données de tiers.

4. Le procédé de la revendication 3 dans lequel les données participatives (835) sont obtenues auprès d'au moins une base de données en ligne disponible publiquement (175).

5. Le procédé de la revendication 3 dans lequel les données participatives (835) sont obtenues auprès d'au moins une base de données de tiers propriétaire.

6. Un composant de vérification de configuration de réseau (160) conçu pour réaliser une vérification de configuration d'antenne au sein d'un réseau de communication cellulaire (100), le composant de vérification de configuration de réseau (160) comprenant au moins un module de traitement de signal (162) conçu pour :
obtenir (830, 840) des données participatives (835) comprenant une indication d'un point central au sein d'une zone de couverture d'un secteur de cellule (220, 222, 224) du système de communication cellulaire (100),
les données participatives (835) comprenant des données indicatives d'une couverture réelle de cellule telle que la connaît une pluralité d'unités de communication sans fil (130), et
l'indication du point central au sein de la zone de couverture étant basée sur la couverture réelle de cellule telle que la connaît la pluralité d'unités de communication sans fil (130) ;
déterminer une distance, d, entre le point central au sein de la zone de couverture du secteur de cellule (220, 222, 224) et un emplacement géographique d'une antenne (210) du secteur de cellule (220, 222, 224) ;
calculer une distance escomptée, D, entre un point central escompté au sein de la zone de couverture du secteur de cellule (220, 222, 224) et l'emplacement géographique de l'antenne (210) ;
vérifier si une différence entre la distance déterminée, d, et la distance escomptée, D, est supérieure à une valeur seuil ; et
identifier une configuration d'antenne potentiellement incorrecte pour le secteur de cellule (220, 222, 224) si la différence entre la distance déterminée, d, et la distance escomptée, D, est supérieure à la valeur seuil.

7. Un produit-programme d'ordinateur non transitoire ayant un code lisible par ordinateur stocké sur celui-ci pour la programmation d'un module de traitement de signal (162) afin de réaliser un procédé de détermination d'une configuration d'antenne incorrecte au sein d'un réseau de communication cellulaire (100), le code étant opérationnel pour :
l'obtention de données participatives (835) comprenant une indication d'un point central au sein d'une zone de couverture d'un secteur de cellule (220, 222, 224) du système de communication cellulaire (100),
les données participatives (835) comprenant des données indicatives d'une couverture réelle de cellule telle que la connaît une pluralité d'unités de communication sans fil (130), et
l'indication du point central au sein de la zone de couverture du secteur de cellule (220, 222, 224) étant basée sur la couverture réelle de cellule telle que la connaît la pluralité d'unités de communication sans fil (130) ;
la détermination d'une distance, d, entre le point central au sein de la zone de couverture du secteur de cellule (220, 222, 224) et un emplacement géographique d'une antenne (210) du secteur de cellule (220, 222, 224) ;
le calcul d'une distance escomptée, D, entre un point central escompté au sein de la zone de couverture du secteur de cellule (220, 222, 224) et l'emplacement géographique de l'antenne (210) ;
la vérification quant à savoir si une différence entre la distance déterminée, d, et la distance escomptée, D, est supérieure à une valeur seuil ; et
l'identification (870) d'une configuration d'antenne potentiellement incorrecte pour le secteur de cellule (220, 222, 224) si la différence entre la distance déterminée, d, et la distance escomptée, D, est supérieure à la valeur seuil.
